# EUROPEAN PATENT SPECIFICATION

(11) **EP 2 933 725 B1**
(45) Date of publication and mention of the grant of the patent: **23.11.2016**
(21) Application number: 15167448.8
(22) Date of filing: 21.09.2012
(51) Int. Cl.: G06F 11/10, G06F 11/14, G06F 11/20

(54) **METHODS AND SYSTEMS FOR HETEROGENEOUS DATA VOLUME**
METHODEN UND SYSTEME FÜR HETEROGENE DATENVOLUMEN
MÉTHODES ET SYSTÈMES POUR LE VOLUME DE DONNÉES HÉTÉROGÈNES

(30) Priority: 21.09.2011 US 201113239258
(43) Date of publication of application: 21.10.2015
(62) Divisional of application: 14176942.2
(73) Proprietor: Nexenta Systems, Inc., Santa Clara, CA 95050 (US)
(72) Inventor: Aizman, Alexander, Mountain View, CA California 94041 (US); Remanan Pillai, Vineeth, Mountain View, CA California 94041 (US)
(74) Representative: Pisani, Diana Jean

(56) References cited:
- US-B1- 7 293 133
- US-B1- 7 478 221
- US-B1- 7 617 259

## Description

### FIELD OF TECHNOLOGY

Heterogeneous storage systems and methods that provide fault tolerant data storage with improved input/output (I/O) performance and integrated support for remote mirroring and hierarchical storage management applications.

### BACKGROUND OF THE INVENTION

Typical data volumes consist of one or more storage disks with similar, if not identical, characteristics, such as I/O speed, media type, parity scheme and other physical and operating characteristics. These storage disks are typically configured according to a replication scheme that provides increased capacity, I/O performance and availability of the data. Conventional replication schemes are commonly implemented as Redundant Arrays of Inexpensive Disks (RAID); a variety of RAID configurations (or schemes) exist to suit different storage needs. For instance, a RAID-1 scheme maintains an exact copy (or mirror) of data blocks on two or more disks. An N-way mirror is said to include N disks (where N > 1) that maintain N identical copies of data, one copy per disk.

Data volumes typically comprise one or more RAID groups of disks and, optionally, spare disks with similar characteristics that can be hot-plugged to the volume in case of a failure of a data disk.

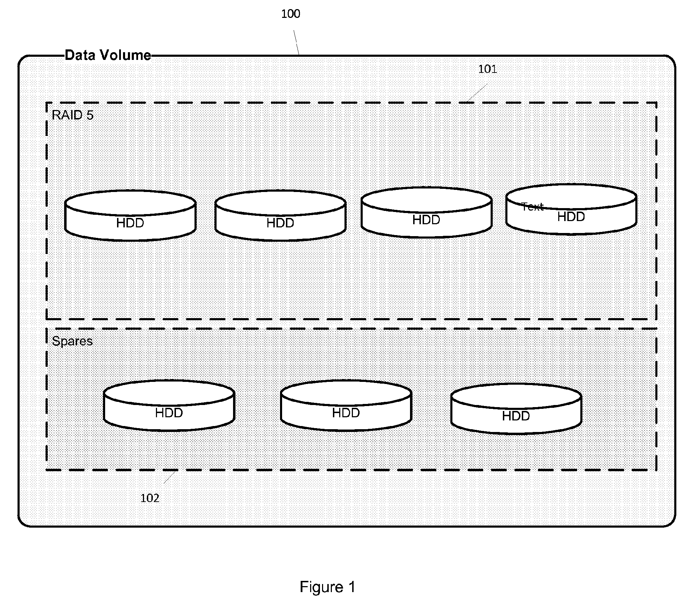

FIG. 1 illustrates a typical data volume 100 with a single RAID-5 group 101 having four storage disks 104. The data volume 100 also includes three spare disks 102. In general, the RAID-5 replication scheme works as follows. Each logical block submitted by an application for writing is segmented into data blocks. Assuming the RAID-5 group 101 includes four data disks, for each set of three data blocks an additional parity block would have to be generated. The three data blocks and the parity block in combination are said to be a stripe. Logical blocks are then written to the data volume 100 in stripes, wherein each stripe spans the entire four disks and includes three data blocks and one parity block. The RAID-5 scheme improves the overall I/O performance and provides for data recovery should any one of the data disks fail. In the event of, for instance, a latent sector error, a corresponding corrupted data block may be reconstructed from the remaining data blocks and a parity block. RAID-5 will survive a total loss of a single drive as well.

In general, replication schemes used in the existing data volumes are subject to the following issues:

First and foremost, even with substantial redundancy configured in, the conventional replication schemes present no protection against simultaneous failure of multiple drives within the RAID or a RAID controller itself. For instance, the RAID-5 shown on the FIG. 1 will not be able to withstand simultaneous failure of any two of its four disks. This simple example demonstrates the need to maintain remote copies using external to RAID mechanisms, such as third party backup and disaster recovery software.

Redundancy itself has a price. The price is associated with reduced effective capacity of the data volume. For instance, the capacity of a RAID-1 including same-size N disks (N >= 2) would be equal to the capacity of a single disk. Hence, there is a tradeoff that needs to be made between data protection (via multiple copies of data) and effective storage capacity.

Yet another type of the tradeoff that storage administrators and IT departments need to often consider is the tradeoff between storage capacity and I/O performance. In particular, rapid advances in performance, reliability, and storage capacities for solid state drives (SSD) make it feasible for SSD drives to be used within the data volumes. In comparison to rotating hard disk drives (HDDs), SSDs offer better random I/O performance, silent operation and better power consumption due to an absence of moving parts. SSDs however have a number of limitations, including dependency on strict 4K or 8K I/O alignment, certain requirements on I/O block size required for optimal performance, degrading performance due to wearing of storage cells, lower capacity compared to HDDs and higher price. All of the above renders SSDs suitable for storage of certain types of data - in particular, data that requires superior I/O performance.

Similarly, available HDDs differ substantially in performance, depending on the vendor, model, capacity and other characteristics. Using disks of different types in a conventional data volume will yield sub-optimal performance.

For instance, let's consider a read workload in a data volume containing two disks configured in RAID-1 (mirror) scheme - one disk operating at 100MB/second and another at 200MB/second for read operations. Traditional data volumes will spread the I/O workload evenly among all the disks in the volume. The combined read throughput in this example, assuming a conventional round-robin scheme employed in the data volume, will average to up to 133MB/second. This is of course better than the 100MB/second of the slower disk but certainly much worse than the 200MB/second expected of the faster disk.

An attempt to use both SSDs and HDDs in a conventional volume will also produce sub-optimal results. Due to the seek latency and rotational delay, existing data access mechanisms utilize I/O request queuing and reordering specifically finetuned for rotating disks. The corresponding I/O processing logic is unnecessary for SSDs because of the fact that SSDs have no rotational delay or seek latency.

Further, an attempt to utilize disks with different characteristics within a conventional data volume may adversely affect not only I/O performance of a conventional data volume but its reliability as well. For instance, SSDs have limited lifetimes, in terms of maximum number of program-erase (P/E) cycles. The life span of SSDs can be increased if data access mechanisms that write to SSDs compress the data before writing. This, and similar differentiation targeting heterogeneous storage media, is simply not present and not designed-in, as far as conventional data volumes are concerned.

To summarize, existing data volumes provide the benefits of transparent access to multiple disks and replication schemes for applications, such as filesystems, databases, search engines, cloud storage systems. The associated tradeoffs and limitations include the tradeoff between effective capacity and levels of replication (redundancy), and the tradeoff between capacity and I/O performance. This is why optimizing applications that access different types of data for overall performance and reliability often comes with additional complexity of accessing multiple data volumes - a volume per type of data. For example, a database I/O performance will improve if its indexes are stored on SSDs. See Sunil Kamath, Unleashing the Value of Solid-State Drives for DB2 Workloads, IBM Technical White Paper, January 2010. It may not appear to be feasible, however, to store database tables (as opposed to indexes) on the SSDs as well - as the latter may require multiple terabytes or even petabytes of capacity. Hence, this tradeoff between capacity and I/O performance currently cannot be resolved within a scope of a single data volume.

Similarly, existing local filesystems contain files and directories that, from a user perspective, often require different access latencies, priorities of I/O processing, capacities, replication levels - or a combination of all of the above. Existing local filesystems do not, however, span multiple data volumes. Therefore, the requirement to handle files and directories of a given filesystem differently (for instance on a perfile type or a wildcard match basis) is currently impossible to address.

U.S. Patent Application Publication No. 2010/0281230 describes mechanisms for relocating data between tiers of storage media in a data storage volume. U.S. Patent No. 5,696,934 describes a method of using storage disks having different storage capacities in a single data storage volume. U.S. Patent No. 7,113,984 describes networked storage systems that use mirrored storage units separated by large physical distances. U.S. Patent Application Publication No. 2004/0153606 describes a storage system that supports two or more classes of storage on a single device.

U.S. Patent No. 7,478,221 describes a system using consistent virtual addresses to communicate in cooperative multi-layer virtualization environments including a volume server, one or more physical storage devices, a front-end layer, and a back-end layer of virtualization participants. U.S. Patent No. 7,293,133 describes a system and method for performing operations in a multi-class file system without requiring split mirrors. U.S. Patent No. 7,617,259 describes a file system that saves dirty file information indicating portions of files, residing on a storage system, to be modified corresponding to data modification requests received by the file system.

### SUMMARY OF THE INVENTION

The present invention provides a method and system for reading a data segment of a logical block of data from a heterogeneous data volume according to the appended independent claims 1 and 8, respectively.

### BRIEF DESCRIPTION OF THE DRAWINGS

The invention itself, further objects, use cases and advantages thereof, will be best understood by reference to the following detailed description of an illustrative exemplar when read in conjunction with the drawings, wherein:
FIG. 1 illustrates a typical data volume with a single RAID-5 group, including a plurality of four data disks and three spare disks.
FIG. 2 illustrates a heterogeneous data volume in RAID-0 configuration including six redundancy groups (RG1 - RG6) with distinct classes of storage 'cos_ssd_a', 'cos_ssd_b', 'cos_hdd_m', 'cos_hdd_n', 'cos_iscsi', and 'cos_fcoe' associated with 'model A' SSDs, 'model B' SSDs, 'model M' HDDs, 'model N' HDDs, iSCSI attached drives, and FCoE attached drives, respectively.
FIG. 3 illustrates a heterogeneous data volume configured with a single redundancy group (RG1) as a three way mirror with distinct classes of storage accounting for SSD, HDD and iSCSI drives.
FIG. 4 illustrates a heterogeneous data volume configured with a single redundancy group (RG1) in a RAID 1+0 scheme.
FIG. 5 and FIG. 6 illustrate a system in accordance with exemplars described herein.
FIG. 7 illustrates heterogeneous data volume with a single redundancy group (RG1) in a RAID 1+0 scheme.
FIG. 8 shows a flowchart for writing a logical block to the heterogeneous data volume.
FIG. 9 shows a flowchart for reading a logical block from a heterogeneous data volume.
FIG. 10 illustrates a system having an enhanced file system to support the systems and methods described herein.

### DETAILED DESCRIPTION OF THE INVENTION

The systems and methods described herein relate to heterogeneous storage systems comprising a plurality of storage disks of different types. Heterogeneous storage systems are discussed in US Patent Publication 20120017043, application number 13/239258, and European Patent Application EP2405354, application number 11172605.5. The system provides for fault tolerant data storage with improved I/O performance and integrated support for remote mirroring and hierarchical storage management applications.

The following description is presented to enable one of ordinary skill in the art to make and use the invention. Various modifications to the exemplars and the principles and features described herein will be readily apparent to one of ordinary skill in the art. The phrase "in one exemplar" in this specification does not necessarily refer to the same exemplar. Thus, the systems and methods described herein are not intended to be limited to the exemplars shown, but are to illustrate and explain the principles and features described herein. Moreover, the exemplars are shown with certain combinations of elements and components, but these combinations are only for the purpose of illustration, and the components and elements may be combined in different ways as appropriate to address the technical problems being overcome, and thus the systems and methods described herein are not to be limited to the disclosed combinations.

A heterogeneous data volume comprises a plurality of storage disks assembled in one or more redundancy groups. In one implementation, each redundancy group supports a certain RAID scheme, for instance: RAID-0, RAID-1, RAID-5, RAID-6, RAID-1+0. Each redundancy group is comprised of disks and/or other redundancy groups.

One of ordinary skill in the art will notice that a plain striped array of disks (that is, RAID-0) is also considered a redundancy group in the context of this invention.

A homogeneous redundancy group is said to comprise either a plurality of identical disks or a plurality of other identical redundancy groups.

A heterogeneous redundancy group comprises storage disks of different types with respect to disk vendors, models, capacities, I/O performances, or associated classes of storage assigned by administrator or a storage management system (SMS).
A heterogeneous redundancy group may also contain other redundancy groups that are different either with respect to the types of disks that those (contained) groups in turn contain, or their corresponding replication schemes. For instance, a mirrored redundancy group that contains a RAID-5 group and a RAID-6 group is considered to be heterogeneous.

Further, each disk in the data volume is associated with a property referred to as a class of storage which is either derived by the system based on the storage characteristics including: model, vendor, capacity, I/O latency, I/O throughput, or assigned by an administrator via storage management interface, or an automated storage management system (SMS).

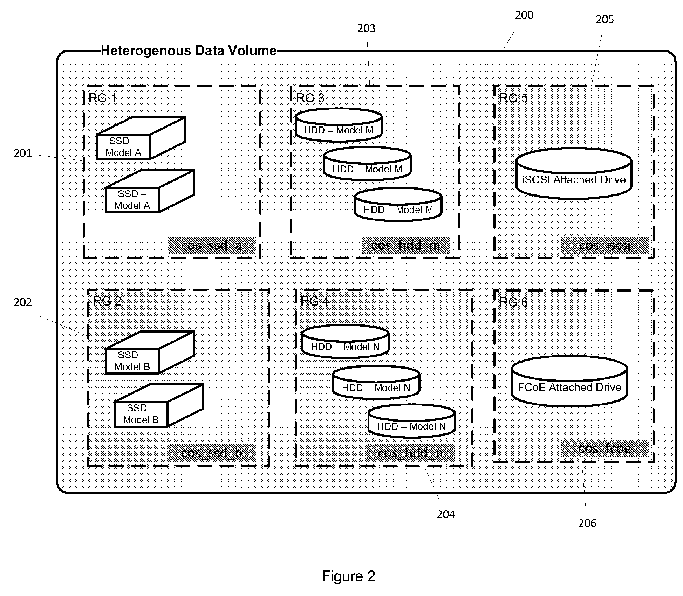

A class of storage associated with each storage disk is a named set of properties that in combination reflect characteristics of the storage device as well as operations performed on data prior to storing the data. The properties of a class of storage may be stored as an instantiated data structure, or as persistent metadata, maintained by the storage system. More specifically, class of storage with its composite properties is a metadata and is persistent. Embodiments will make it persistent by storing it, along with the other associated metadata. FIG. 2 illustrates a heterogeneous data volume 200 in a RAID-0 configuration with distinct classes of storage named 'cos_ssd_a', 'cos_ssd_b', 'cos_hdd_m', 'cos_hdd_n', 'cos_iscsi', and 'cos_fcoe'. In these exemplars, a class of storage includes the following additional attributes:

Number of copies: a numeric value that denotes the number of copies of the logical block to be stored when the logical block is being written to the heterogeneous data volume. For RAID-1 and other mirrored schemes, this provides for the capability to store extra copies, in addition to those produced by mirroring. For non-mirrored replication schemes this provides for functionality that is similar to mirroring, that is storing full copies of data on RAIDs of different levels.

Data access mechanisms: In exemplars of the system disclosed herein, each class of storage defines certain data reading and data writing mechanisms optimized for reading and writing the corresponding storage medium.

Read preference: In the presence of multiple copies stored on different disks in a heterogeneous data volume, the "read preference" or "read preference value" determines which particular disk is accessed to read a copy of the logical block. In the exemplars, read preference is implemented in a variety of ways including a statically defined scheduling weight assigned to each disk, or a dynamically computed value based on, for instance, current numbers of per-disk pending I/O operations.

Asynchronous write: When a logical block is written with multiple copies (which includes both the case of mirrored replication scheme and the case of explicitly specified "number of copies > 1" attribute of the corresponding class of storage), an "asynchronous write" property for a disk or a redundancy group specifies that the write can be asynchronous. A write operation for the logical block can return to the caller without the completion of write to this disk or redundancy group.

In addition to the attributes mentioned above, class of storage can have attributes that specify operations on the data performed before it is getting stored on a heterogeneous data volume. The operations include compression, encryption and de-duplication.

In one exemplar, compression is an additional attribute of classes of storage associated with storage disks. Compression denotes an algorithm to be used for compressing the data before it is written to the corresponding storage disks, examples include gzip, Izjb, and other lossless compression algorithms.

In another exemplar, encryption is an additional attribute of classes of storage associated with storage disks. Encryption denotes an algorithm to be used for encrypting the data before it is written to the corresponding storage disks, examples include shared secret encryption mechanisms such as DES, AES, as well as public key encryption mechanisms.

Each redundancy group in the heterogeneous data volume is by default associated with a composite class of storage which is a logical disjunction of classes of storage of its children: contained disks and redundancy groups. In one implementation, the storage systems described herein determine a composite class of storage by logically-ordering together the class of storage structures associated with the storage devices within the redundancy group. In one example, a composite class of storage may in one embodiment be associated with a set of properties or other attributes such as, for example, "Class", "Min-pending", "Max-pending", and "Pre-read".

Each logical block in the I/O path is associated with a basic or composite class of storage which is assigned by the system or SMS, or by the application that issued the I/O request. Thus, a file system application may assign a class of storage to a particular file extension known to the file system. For example, the file extensions representing computer source code files may be assigned a class of storage having two sets of redundant copies, one of which is remote. This class of storage provides for more secure storage of the source code files handled by the file system application.

A system disclosed herein groups the disks and redundancy groups together with a basic or composite class of storage property and applies data access mechanism associated with the class of storage to store/retrieve data. To this end, the system may include a tree structure that associates a disk or redundancy group with a basic or composite class of storage, and the tree structure may be referenced by the storage system when reading data from or writing data to a disk or redundancy group.

In exemplars of the system disclosed herein, data access mechanisms associated with specific classes of storage are optimized for accessing (reading and writing) the corresponding storage medium. For instance, when writing to SSDs, it is generally preferable to avoid queuing and reordering (sorting) of writes - the techniques that are typically used when writing to conventional rotating drives. This can be expressed via specialized data writing mechanism that would map onto the corresponding class of storage (for instance, 'cos_ssd') in accordance with the system disclosed herein. Similarly, class of storage associated with SSDs can be associated with a data read mechanism that avoids read reordering and prefetching, due to the fact that SSDs have zero seek time.

A parent/child relationship in a heterogeneous data volume, whereby a volume contains redundancy groups that in turn contain (child) redundancy groups and/or disks, implies inheritance of properties: from volume to contained groups of disks to disks. In one exemplar, any class of storage property can be overridden or updated by administrator or SMS, independently of whether this property was inherited from a parent in a (volume, redundancy group, disk) containment, or assigned by the system based on auto-detected characteristics of the corresponding storage media.

Class of storage associated with logical blocks being read from or written to a heterogeneous data volume can be updated dynamically at runtime, based on a system runtime context available in the I/O path. The runtime context can include data classification policies and classes of data for which the dynamic modification is enabled or disabled.

For instance, a system in accordance with the system disclosed herein can identify that a given filesystem is being accessed frequently for reading a certain subset of files or directories stored on HDDs. Performance of applications issuing the corresponding read operations can be significantly improved if the reads are directed to read-optimized SSDs. Hence, the class of storage for the frequently accessed filesystem objects can be updated dynamically to a class of storage that maps to read optimized SSDs.

In one exemplar, classes of storage are dynamically updated at runtime using the existing art of managing I/O caches in memory. The corresponding algorithms that often employ most frequently used (MFU) and/or least recently used (LRU) counters are used in this exemplar to automate data migration between solid state drives, conventional hard drives and remotely attached LUs (Logical Units). This exemplar effectively implements hierarchy of persistent caches over variety of the heterogeneous volume contained storage media with different classes of storage and different I/O performance characteristics.

The systems and methods described herein allow for leveraging a proven existing art of cache algorithms that includes a family of LRU algorithms, Adaptive Replacement Cache (ARC) and others, whereby "eviction" from cache is implemented as automated migration of the corresponding data items to slower, or less expensive, or remote storage. The tradeoff between storage capacity and I/O performance is thus being addressed at the system level. In the exemplar, the system disclosed herein provides for automated rebalancing of the most frequently accessed data to fast and more expensive local drives that in turn often have orders of magnitude less capacity than the remote and/or cheaper storage media.

One of ordinary skill in the art will appreciate that persistent heterogeneous storage can be managed optimally and transparently from users, based on existing art of managing I/O caches in memory.

The systems and methods described herein can take the form of an implementation done entirely in hardware, entirely in software, or may be an implementation containing both hardware-based and software-based elements. In some exemplars, this disclosure may be implemented in software, which includes, but is not limited to, application software, firmware, resident software, program application code, microcode.

Furthermore, the systems and methods described herein can take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program or signals generated thereby for use by or in connection with the instruction execution system, apparatus, or device. Further a computer-readable medium includes the program instructions for performing the steps of the methods and processes described herein. In one implementation, a computer-readable medium preferably carries a data processing or computer program product used in a processing apparatus which causes a computer to execute in accordance with the systems and methods described herein. A software driver comprising instructions for execution of the systems and methods described herein by one or more processing devices and stored on a computer-readable medium is also envisioned.

The medium can be an electronic, magnetic, optical, electromagnetic, infrared, or semiconductor system (or apparatus or device) or a propagation medium, or a signal tangibly embodied in a propagation medium at least temporarily stored in memory. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include DVD, compact disk-read-only memory (CD-ROM), and compact disk - read/write (CD-R/W).

Specific exemplars of the invention will now be described in detail by referring to the accompanying pictures where ever necessary.

FIG. 2 illustrates a heterogeneous data volume 200, with a plurality of six redundancy groups 201-206, each of the redundancy group comprising homogeneous storage mediums in the order - 'Model A' SSD, 'Model B' SSD, 'Model M' HDD, 'Model N' HDD, iSCSI attached Drive and FCoE attached Drive, where each disks are assigned class of storage in the order 'cos_ssd_a', 'cos_ssd_b', 'cos_hdd_m', 'cos_hdd_n', 'cos_iscsi', and 'cos_fcoe'. Since the redundancy groups in this figure include only homogenous disks, class of storage of redundancy group is same as that of the disks in the redundancy group.

One of ordinary skill in the art will appreciate the benefits provided by a system illustrated in FIG. 2. At write time, data assigned a particular class of storage will be routed only to the disks that have a matching class of storage. For instance, data that requires minimum I/O latency (for instance, database indexes) can be stored with class of storage 'cos_ssd_a' or 'cos_ssd_b'; when the corresponding writes are performed, this data will be routed to redundancy group RG1 201 or redundancy group RG2 202. On the other hand, a backup or archival data (for instance, older email archives) could be assigned class of storage 'cos_iscsi' or 'cos_fcoe'; this data will then be routed to RG5 205 or RG6 206.

Data with a composite class of storage can make use of multiple redundancy groups so that data can be striped. For example, data that needs continuous backup can be assigned a composite class of storage 'cos_hdd_m |cos_iscsi', where the resulting class of storage is the logical disjunction of 'cos_hdd_m' and 'cos_iscsi'. Assigning a number of copies to two copies for this composite class of storage would then result in two copies - one copy in RG3 203 and one in RG5 205.

Hierarchical Storage Management (HSM) is a technique where the storage resources allocated for a particular file can evolve over time without changing the contents of the file or the file name used to reference it. When a file is new, HSM may extensively replicate the file both for protection and to facilitate heavy parallel access. As the same file becomes older, an HSM system may migrate the file so that protection of its payload is provided by offline archives, such as tapes or cheaper SATA drives, rather than top-grade hard drives or solid state drives.

In one exemplar, the system illustrated in FIG. 2 performs hierarchical storage management by designating different classes of storage to (a) the data to be stored locally and (b) the data to be stored remotely - the latter for instance on the iSCSI attached drives. By setting policies for data migration from local storage to remote storage, an automated HSM can be then facilitated. One common policy may be setting maximum interval of time since a locally stored file was accessed. Once this interval expires, the corresponding file is assigned class of storage 'cos_iscsi'.

Subsequently, this file is migrated to the corresponding iSCSI attached drives that have themselves associated classes of storage denoted as 'cos_iscsi' (FIG. 2). Data migration can be performed in a variety of ways known in the art. An application, a script, or any known in the art mechanism that performs migration will eventually write each data block that constitutes the original file back to the heterogeneous data volume, onto the drives of the heterogeneous data volume that have the matching class of storage - 'cos_iscsi' in this example.

One of ordinary skill in the art will appreciate that the systems and methods described herein enable HSM implementations to leverage per class of storage writing and reading mechanisms by simply modifying, with respect to configured HSM policies, a class of storage assigned to a given data item or a given dataset that is stored on a heterogeneous data volume.

Further, HSM applications can dynamically and continuously migrate data between the disks and redundancy groups of the heterogeneous data volume, and modify the class of storage of the data. In one implementation, HSM leverages the systems and methods described herein and implements policies that control when to move the data around, and how to store it. HSM may do that by rewriting the right data (example, certain files) at the right time while having modified the class of storage of this data accordingly. In one exemplar, a third party HSM product is configured to modify at runtime classes of storage of the files stored on a heterogeneous data volume. Migration of the files that are downgraded or upgraded by the HSM with respect to their corresponding classes of storage is facilitated via existing and known in the art data migration algorithms. The per class of storage I/O access mechanism and storing of the data blocks that constitute migrating files onto the corresponding (matching) disks is provided by the systems and methods described herein.

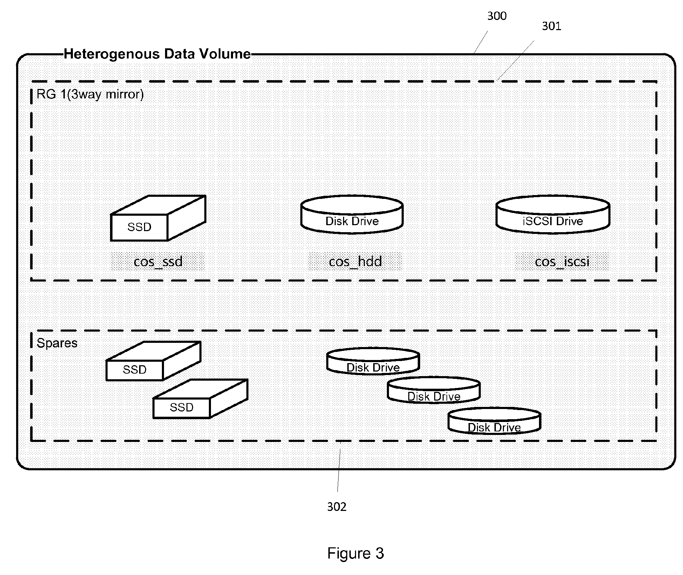

FIG. 3 illustrates a heterogeneous data volume 300 that has a single redundancy group 301 configured as a three way mirror with three storage mediums of different type. The heterogeneous data volume 300 also includes two spare SSDs and three spare HDDs are located in spare area 302. Redundancy group RG1 301 comprises an SSD with class of storage 'cos_ssd', and HDD with class of storage 'cos_hdd' and an iSCSI attached Drive with class of storage 'cos_iscsi'. In this exemplar, class of storage of the redundancy group RG1 301 is a logical disjunction of classes of storage of the contained disks: 'cos_ssd | cos_hdd | cos_iscsi'. Due to the parent child relationship, all the disks in the redundancy group inherit this composite class of storage for any I/O operation and hence any data with class of storage 'cos_ssd', 'cos_hdd', 'cos_iscsi' or any combination of these will be copied to all the three disks.

The system as illustrated by FIG. 3 can perform as an integrated backup wherein, the class of storage 'cos_iscsi' will act as the backup for the data. This system with the class of storage 'cos_iscsi' being configured for asynchronous writes will perform the writes to remote attached drives asynchronously. This will allow the write request to not have to wait for the slower writes to remote attached drives.

The reading mechanism of the exemplar of FIG. 3 makes sure that the reads are performed giving more (reading) preference to 'cos_ssd', less to 'cos_hdd' and the least - to 'cos_iscsi'.

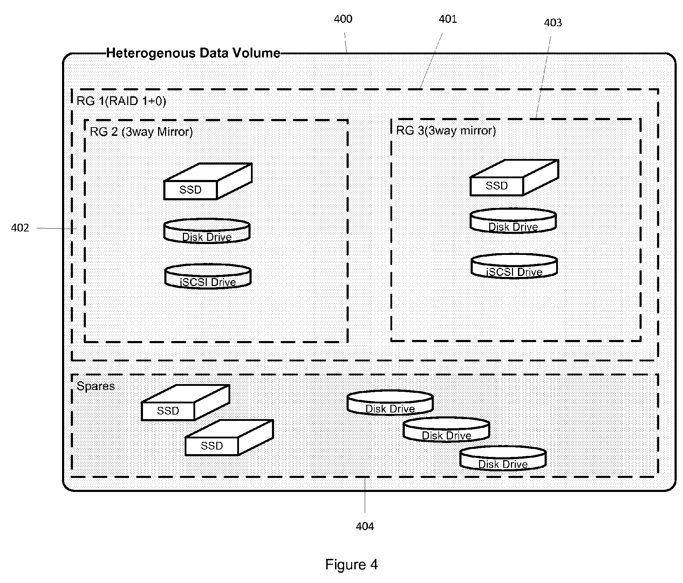

FIG. 4 illustrates a heterogeneous data volume 400 with a single redundancy group 401 configured in RAID-1+0. Redundancy group RG1 401, in turn, comprises two redundancy groups - redundancy group RG2 402 and redundancy group RG3 403 in RAID-0 configuration wherein these redundancy groups comprises three disks as a three way mirror. The disks are SSD with class of storage 'cos_ssd', HDD with class of storage 'cos_hdd' and an iSCSI attached drive with class of storage 'cos_iscsi'.One of ordinary skill in the art will appreciate that this modified RAID-1+0 scheme provides additional benefits of improved I/O performance along with availability of remote copy of data on iSCSI attached drives. The heterogeneous data volume 400 also includes two spare SSDs and three spare HDDs are located in spare area 404.

In one exemplar, a request to write a logical block to the data volume as illustrated in FIG. 4 is processed as follows. First, a logical block of data is received and class of storage of the logical block is matched with the class of storage of the redundancy group. The redundancy group RG1 401 is selected for writing this logical block, and then the total number of data blocks to be allocated in this redundancy group is calculated based on its replication scheme (that is, RAID-1+0). The matching process can take place through any suitable means and, for example, may involve a strict matching process that seeks to match the class of storage associated with a logical block exactly with the class of storage associated with a disk or redundancy group.

In another embodiment, the matching process can be a best-match process that matches the class of storage associated with the logical block against the classes of storage provided by the disks and/or redundancy groups and selects the disk or redundancy group that has a class of storage with the highest number of matching properties to the class of storage associated with the logical block. Still other matching processes can be used including a process that will make a default match if not sufficiently close match is found. But in any case, it will be apparent to those skilled in the art that the type of matching process used can vary and the systems and methods described herein are not to be limited to any particular matching process.

Next, one of child redundancy groups, RG2 402 or RG3 403, is selected for this logical block based on the previous write. Once a particular redundancy group is selected, a number of data blocks for this redundancy group are calculated.

FIG. 4 illustrates 3-way mirror replication scheme, whereby each of the depicted redundancy groups has one SSD, one HDD and one iSCSI attached drive. For each data block to be written, the data writing mechanism of the corresponding class of storage is chosen, and the data is then written to the disk using this selected data writing mechanism. Write completion is reported back to the application which requested the write operation.

This exemplar provides for disaster recovery, with iSCSI attached drives in redundancy group RG2 402 and redundancy group RG3 403 being utilized for built-in remote backup. One of ordinary skill in the art will appreciate that no separate backup software is needed to facilitate this operation - the drives are effectively mirrored remotely as part of the built-in RAID operation of the heterogeneous data volume.

In the exemplars, the class of storage ('cos_iscsi') associated with these remote iSCSI drives from RG2 402 and RG3 403 can have asynchronous write property enabled or disabled, depending on several factors including distance, available bandwidth, and whether the corresponding (iSCSI Initiator, iSCSI Target) nexus has a dedicated set of network interfaces.

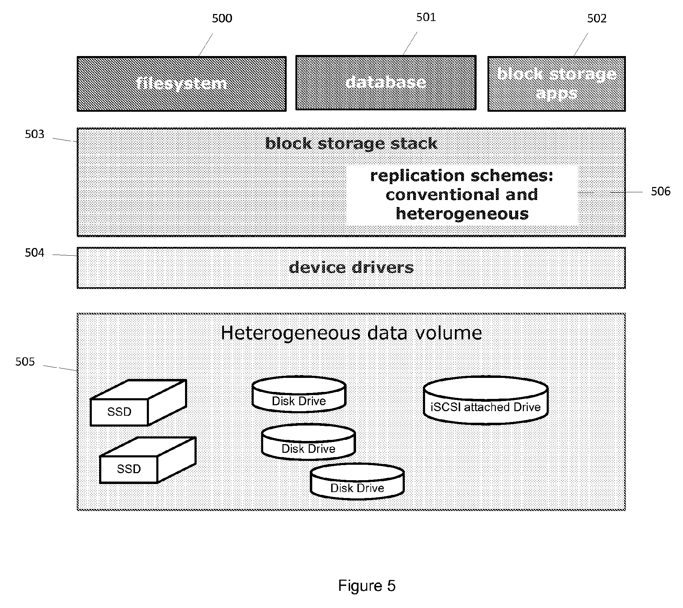

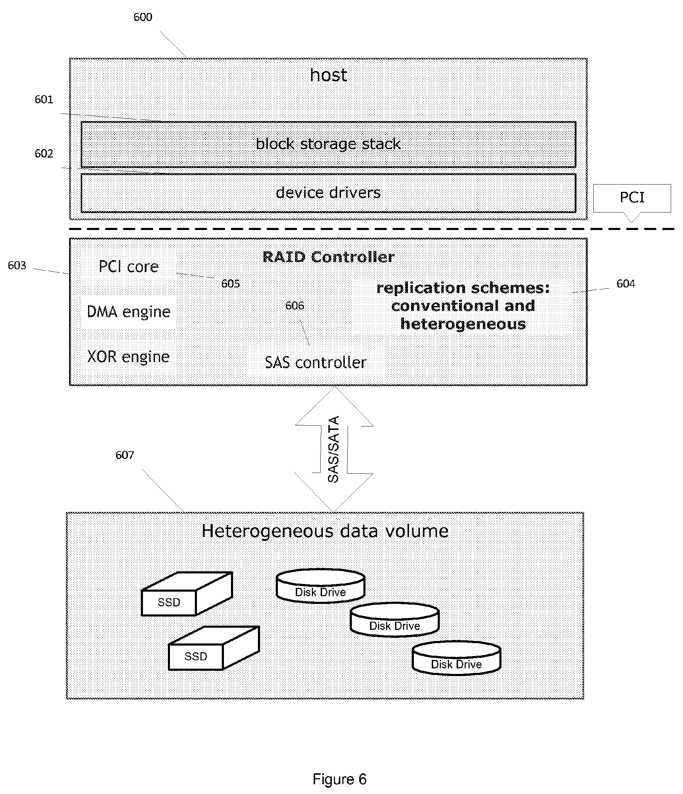

FIG. 5 and FIG. 6 illustrate system architectures, in accordance with the exemplars of the systems and methods described herein. The system architecture as depicted by FIG. 5 illustrates a filesystem 500, database engine 501 and other block storage applications 502 that interact with the bock storage stack 503. The block storage stack 503 accounts for the software that handles replication logic 506, including both the conventional replication schemes as well as the enhanced replication schemes in accordance with the systems and methods described herein. The block storage stack 506 uses device drivers to control storage inter-connects (SAS, SATA, FC, FCoE, iSCSI, USB, etc.) and interface with a heterogeneous storage array 505.

Heterogeneous data volume combines plurality of storage disks organized in a variety of replication schemes. In one exemplar, block storage stack 503 as shown in FIG. 5 handles the replication (RAID) schemes of the heterogeneous data volume. In the exemplar, an operating system handles the replication schemes, while a storage array controller handles writing and reading data to/from the storage array.

The systems and methods described herein provide for the RAID enhancements to support heterogeneous arrays with advanced features discussed above. The corresponding exemplars will reuse iSCSI and FC stacks that are also currently available in all major operating systems.

FIG. 6 shows an alternate architecture. The system architecture includes a host 600, a RAID controller 603 and a heterogeneous storage array 607 connected to the RAID controller 603. RAID controller 603 provides for the RAID logic that supports conventional RAID schemes and the advanced heterogeneous RAID schemes in accordance with the systems and methods described herein. RAID controller also includes modules that provide for PCI 605 and other functions. The host runs an operating system that includes block storage stack 601 that in turn uses the device drivers 602 to interface with the RAID controller 603.

The RAID controller 603 interfaces with the data volume via SAS, SATA, FC, FCoE, iSCSI and other compliant storage inter-connects managed by the corresponding modules (for instance, SAS controller 606 shown on the figure) within the RAID controller itself. The SAS controller 606 will provide attachment to SAS and SATA drives; more than a single type of transport controller can be added to provide for multiple I/O access mechanisms. The RAID controller 603 handles replication logic 604, including both the conventional replication schemes as well as the enhanced replication schemes of the systems and methods described herein.

In one exemplar, FIG. 6 illustrates the system architecture as an embedded solution. This enables the hosts that do not have the enhanced block storage stack as illustrated in FIG. 5 to make use of the advantages of the systems and methods described herein.

A RAM Disk (also referred to as RAM drive or ramdisk) is a block of random access memory (RAM) that is utilized to emulate a disk drive. The corresponding computer software is often implemented as a RAM Disk block level driver. A RAM Disk will provide a superior I/O performance at the price of not providing for data persistency. Capacity of RAM disks is also limited by the size of RAM and generally is expected to be orders of magnitude smaller than the capacity of stable storage.

The heterogeneous data volume may combine RAM disk and other type of storage media. The latter is a non-volatile storage and can be remote attached block storage, HDDs, SSDs or any combination thereof. This configuration provides for all the enhanced features of the systems and methods described herein, whereby SSDs act as a persistent non-volatile cache, HDDs are utilized for the primary storage, and remote (iSCSI, FC, FCoE) attached storage is designated for the backup and dynamic HSM capabilities. SSDs and RAM disks can be configured to be in a mirrored configuration, with read preference set to the RAM disks. Read operations are therefore satisfied from RAM disk with I/O latency and I/O throughput comparable to the latency and throughput of RAM.

One of ordinary skill in the art will appreciate that read preference in this case is statically configured as: "always read from the RAM disk part of the mirror".

This configuration is best suited for applications with extremely high requirements on read performance of a fairly limited datasets. It is of course possible, although expensive, to deploy hundreds of gigabytes of RAM as RAM Disks.

In preferred exemplars of this invention, SSDs in heterogeneous data volumes are automatically detected. Further, if an SSD is mirrored with a drive or drives that have higher I/O latency and/or lower I/O throughput, read preference value is computed to select the SSD for reading more frequently than the slower drives. This is implemented in a variety of ways including a statically defined scheduling weight (example: 3 out of every 4 reads use SSD), or a dynamically computed value based on, for instance, current numbers of per-disk pending I/O operations

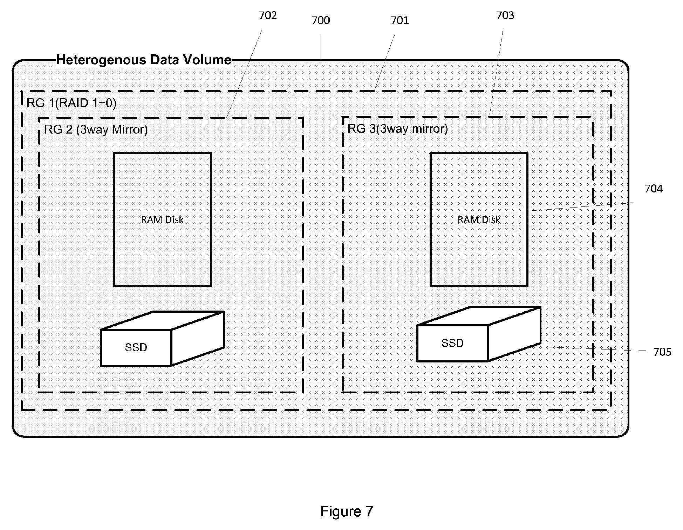

FIG. 7 illustrates a heterogeneous data volume 700 configured as RAID-1+0. Data volume 700 comprises a top level redundancy group RG1 701 which in turn comprises of two redundancy groups RG2 702 and RG3 703 in RAID-0. RG2 702 and RG3 703 are two way mirrors with a RAM Disk 704 and SSD 705.

This exemplar is optimized specifically for applications that require both high performance and high availability of data. Writes to this data volume gets striped across segments of RG1, and the resulting stripes are then mirrored inside RG2 702 and RG3 703. In one exemplar, the class of storage associated with a SSD is in turn associated with an asynchronous writing mechanism, so that write requests do not block on the SSD and perform at the latency of accessing the RAM Disk. For read operations, RAM Disk can have the read preference property statically set so that read operations access only the RAM Disk to retrieve the data.

One of ordinary skill in the art will notice that after system reboot the RAM Disk will be empty; in a mirrored configuration it will be subsequently rebuilt in the background from the non-volatile stable storage such as the SSD.

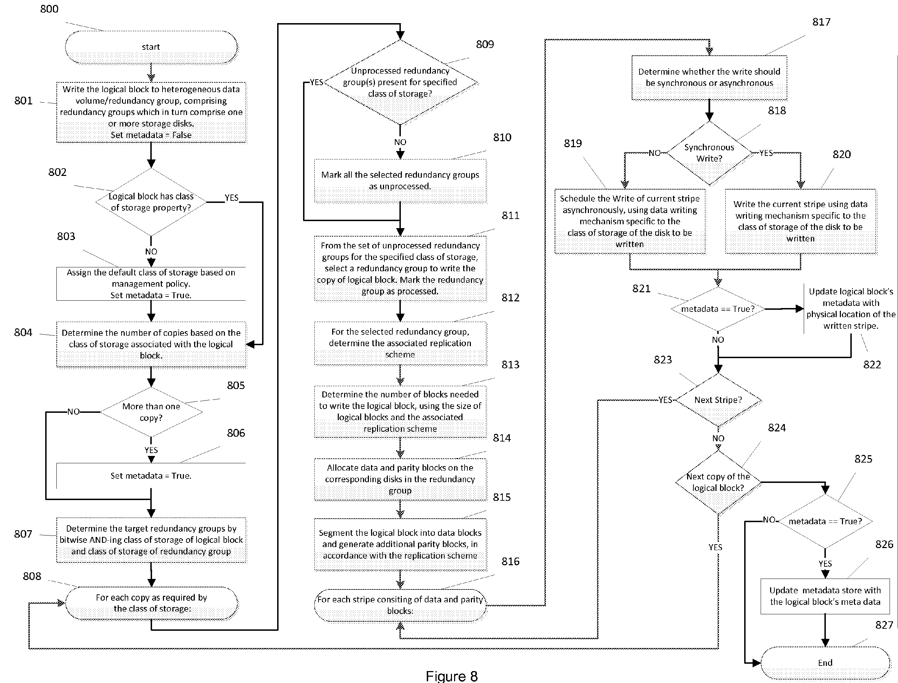

FIG. 8 shows a flowchart for writing a logical block of data to the heterogeneous data volume in accordance with one exemplar. Initially a request for writing a logical block is received, via step 801.

Next, a check for class of storage associated with the logical block is made, via step 802. If the application that uses data volume to store/retrieve data is not heterogeneous data volume aware, the logical block will not be associated with any class of storage. If logical block is not associated with any class of storage, default class of storage is assigned to the logical block, via step 803. A default class of storage may be in certain implementations determined by the predefined policies set by the administrator or SMS with regard to the application that initiates the write request.

One of ordinary skill in the art will appreciate that the systems and methods described herein provide for existing applications to leverage the features of heterogeneous data volume without modifying the application. For instance, a class of storage can be associated on a per filesystem basis, which would mean that the corresponding data will be routed to the corresponding matching drives of the heterogeneous data volume.

If the application is not heterogeneous data volume aware, the data volume needs to store certain extra information regarding this logical block. This information is stored as logical block metadata in the data volume. Requirement for the metadata is flagged for this logical block, via step 803.

Further, the number of copies for the logical block based on its class of storage property is determined, via step 804. If the class of storage property for this logical block specifies more than one copy, the details of extra copy need to be maintained in the metadata. A requirement for metadata is flagged, via step 806 if the check for more than one copy, via step 805 is true.

Next, the target redundancy groups for storing this logical block is determined by matching class of storage of logical block and classes of storage of redundancy groups, via step 807. In one exemplar, this is performed by bitwise AND-ing the class of storage of logical block and the class of storage of the redundancy group.

Once the redundancy groups for this logical block are selected, all the selected redundancy groups are marked as unprocessed. All the copies for this logical block have to be accommodated in the selected set of redundancy groups. For each copy of the logical block, via step 808, target redundancy groups to write the copy to, have to be selected. In one exemplar, this is performed by determining the pending I/O operations on the selected unprocessed redundancy groups, and then selecting the redundancy group with the least pending number of I/O operations, via step 811. This logic evenly distributes I/O operations across the redundancy groups and their storage disks.

Once a target redundancy group for the copy of the logical block is selected, replication scheme of the redundancy group is determined, via step 812 and number of blocks needed to store this copy is determined based on the replication scheme and size of the logical block, via step 813. Data and parity blocks are allocated on the disks of the redundancy group, via step 814. Further, the logical block is segmented into data blocks and parity is calculated if needed based on the replication scheme, via step 815. Each data block is then written to the corresponding storage disks, via step 816.

Based on the associated class of storage and its properties, write operation can be synchronous or asynchronous. For asynchronous write, via step 819, the write operation is scheduled and control is returned back to the caller. For synchronous writes, via step 820, the write operation is issued to the disk and write request from the caller is blocked until the write operation has made it to the disk.

Before the data block is written to the disk, operations are performed on the data block based on the attributes of the class of storage associated with the disk. For instance, data block is compressed using gzip algorithm if the compression attribute of the class of storage associated with the disk is set to gzip.

Next, if a requirement for metadata was flagged previously for this logical block, then the logical block's metadata is updated with the physical location of the written stripe, via step 822.

Once all the stripes for the logical block are written, and if the requirement for metadata was previously flagged, via step 803, the metadata associated with this logical block is written as well, via step 826.

The algorithm illustrated in FIG. 8 is recursive in accordance with the recursive definition of the redundancy group. Each write operation initiated in any redundancy group that comprises one or more redundancy groups is processed recursively in accordance with the same algorithm illustrated on FIG. 8.

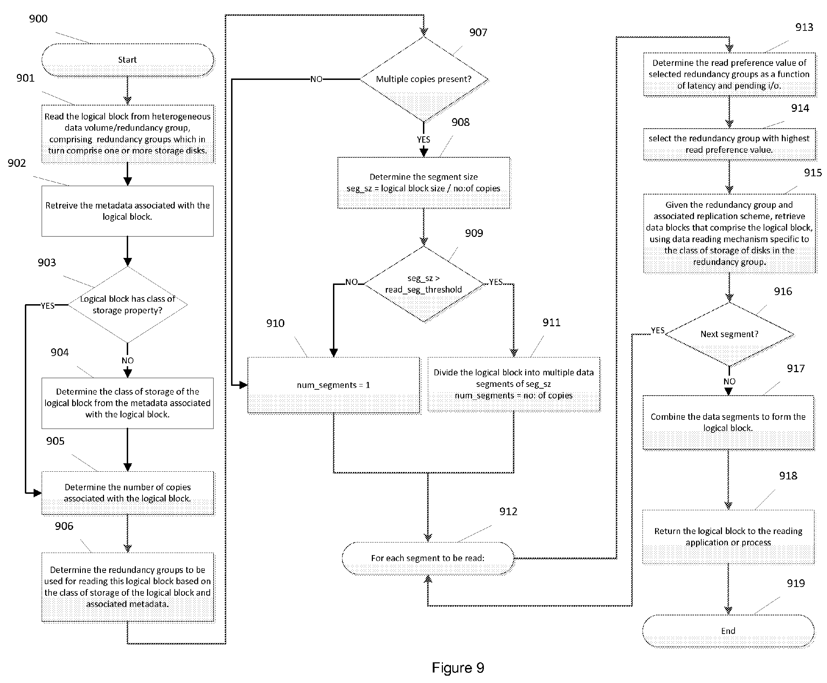

FIG. 9 shows a flowchart for reading a logical block from the heterogeneous data volume in accordance with one exemplar of the systems and methods described herein. Initially a request is received to read a logical block from the data volume, via step 901.

The logical block can have metadata associated with it, if the application that had written this logical block was not heterogeneous data volume aware or the class of storage associated with this logical block specified more than one copy. The metadata associated with this logical block, if exists, is retrieved, via step 902.

Further, if the logical block is not associated with any class of storage, via step 902, the class of storage is determined from the metadata associated with the logical block, via step 904. From the class of storage property associated with the logical block and associated metadata of the logical block, number of copies of the block in the data volume is determined, via step 905.

Further, redundancy groups holding the logical block, is determined. In one exemplar this determination is made by bitwise AND-ing of the class of storage of the logical block and class of storage of the redundancy groups in the data volume, via step 906. If multiple copies are present, via step 907, determination is made whether the logical block is read in parallel from all the redundancy groups that store a copy of this logical block.

Step 908, calculates the data segment size by dividing logical block size by number of copies. Next, if the segment size is greater than a configured segment size threshold denoted as 'read_seg_threshold', the logical block is read by simultaneously reading the data segments from the multiple copies. Exemplars of the systems and methods described herein provide for configuring the 'read_seg_threshold' by the administrator or SMS.

Next, the number of data segments is determined based on above calculation and each segment is read by issuing the read operation in parallel. Number of segments can be one if there is a single copy of the logical block or the calculated value of the segment size is less than the 'read_seg_threshold'.

Further, for each segment, via step 912, a redundancy group for reading the segment is selected. In an exemplar, this selection is done based on a read preference value which is calculated dynamically based on the performance and the pending I/O operations on the redundancy group/disks, via step 913. Redundancy group with maximum read preference value is then selected, via step 914. Once the redundancy group or disk is selected for reading the copy of the logical block, the replication scheme is determined, and the data segment is retrieved using the data access mechanism specific to the class of storage associated with this redundancy group/disks, via step 915.

Once all the segments are read, the logical block is formed by combining all the segments, via step 917 and is then returned back to the application that issued the read request, via step 918.

The algorithm illustrated in FIG. 9 is recursive, with respect to nested redundancy groups. If a given (parent) redundancy group comprises other (child) redundancy groups, a read operation on the parent redundancy group is passed to its children for execution.

The read and write logic described herein may be implemented in the software, firmware, hardware, or any combination of the above. The systems and methods described herein provide applications (such as filesystems, databases, search engines, cloud storage systems) to utilize faster, more expensive and possibly smaller in size disks for different types of data (e.g. database index), while at the same time leveraging existing, well-known and proven replications schemes (such as RAID-1, RAID-5, RAID-6, RAID-1+0, etc.). In addition, exemplars provide for integrated backup and disaster recovery, by integrating different types of disks, some of which may be remotely attached, in a single (heterogeneous) data volume.

The systems and methods described herein support existing, heterogeneous storage unaware, applications. Such applications will not associate class of storage with logical blocks upon writing and reading those blocks to/from the heterogeneous data volume. For such applications the invention provides for additional metadata associated with each written logical block. This metadata accounts for the class of storage of the logical block and physical location of extra copies of this logical block, as required by the corresponding class of storage. This makes it possible for existing applications to make use of the exemplars of this invention without any modifications.

Storage and system administrators can set policies that govern how the data is stored on and retrieved from a heterogeneous data volume outside the applications that use the volume. A class of storage can be associated on a per filesystem basis, which would mean that the corresponding data will be routed to the corresponding matching drives of the heterogeneous data volume. For instance (FIG.2, FIG. 3, and FIG. 4), administrator can assign 'cos_ssd' class of storage to a filesystem holding data that needs low latency access. The matching devices in the volumes shown on FIG.2, FIG. 3, and FIG. 4 will be SSDs. One of ordinary skill in the art will appreciate the fact that unmodified applications can leverage enhanced capabilities provided by this invention at a granularity of the application.

Existing applications, such as filesystems and databases supported by modern Operating Systems (OS), typically make use of OS-specific control data structure to pass logical blocks to the block storage stack. This data structure encapsulates the details such as logical block size and offset, data payload of the logical block, type of I/O preferred, callback mechanism for I/O completion, and flags. This control data structure can be modified to include class of storage. This in turn enables the applications to specify class of storage at any level of granularity including the most fine-grained: on a per logical block basis.

In one exemplar, Zettabyte File System (ZFS) is used to implement the systems and methods described herein. ZFS pool is enhanced to provide the functionality of heterogeneous data volume.

ZFS is a 128-bit filesystem developed originally by Sun Microsystems, and currently supported by OpenSolaris, Illumos and FreeBSD Operating Systems. ZFS has a layered architecture which includes ZFS POSIX Layer (ZPL) - which is the POSIX compatibility layer giving POSIX filesystem interface to users and applications, Dataset and Snapshot Layer (DSL) which manages the datasets and snapshots, Data Management Unit (DMU) - which manages the data from DSL as Objects, and Storage Pool Allocator (SPA) -which manages the storage disks. ZFS follows a transactional model, whereby I/O operations either make it as a whole to the stable storage, or not. I/O operations in ZFS are executed in multiple stages referred to as pipelines, and are represented by zio_t structure.

ZFS groups storage disks into redundancy groups, whereby each group implements a certain replication scheme: 2-way mirror, raidz1, raidz2, raidz3, etc. Every disk and each redundancy group in a ZFS pool is denoted as vdev; vdevs are represented by the vdev_t structure. Leaf nodes are referred to as leaf vdevs and represent physical storage devices. Intermediate nodes are logical redundancy groups which include mirror, raidz, raidz2 and raidz3.

Leaf vdevs (that is, storage disks) are each assigned a class of storage either by the system or by administrator or SMS. Top level vdevs are assigned class of storage based on the leaf vdevs in the top level vdev. Similarly, ZFS datasets are also assigned class of storage by administrator or SMS.

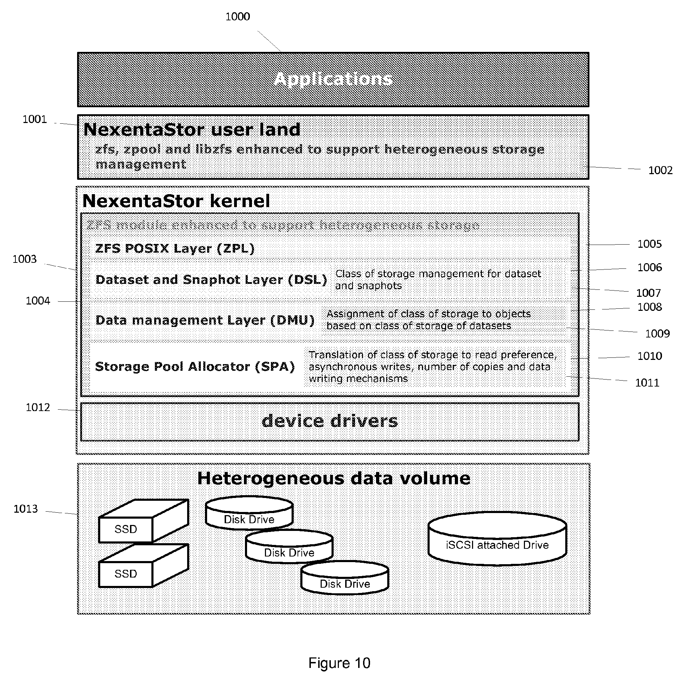

NexentaStor is a proprietary storage appliance that is based on open-source Nexenta Operating System. The latter utilizes OpenSolaris and Illumos kernels that include ZFS. FIG. 10 illustrates one exemplar wherein ZFS module within NexentaStor is enhanced to support the systems and methods described herein. In this exemplar, NexentaStor appliance's kernel 1003 includes a modified ZFS kernel module 1004 that in turn provides support for heterogeneous data volume as described herein.

In this exemplar, ZPL 1005 is unmodified. DSL 1006 is modified to assign, reassign, clear, and propagate via inheritance classes of storage for ZFS datasets and snapshots. DMU layer 1008 handles all data and metadata objects as far as class of storage related processing is concerned. The DMU object types are enumerated in the ZFS on-disk format specification and include DMU_OT_OBJECT_DIRECTORY, DMU_OT_PLAIN_FILE, DMU_OT_DIRECTORY_CONTENTS, DMU_OT_ACL and many other objects.

Further in this exemplar, SPA layer 1011 is enhanced to support read preference logic, asynchronous writes and per class of storage data access mechanisms. ZFS module interfaces with the device driver layer 1012 which in turn interfaces with the heterogeneous storage array 1013 that contains disks of different classes of storage. NexentaStor userland 1001 includes a modified zfs management commands and libraries 1002 to manage heterogeneous data volume.

In the exemplar, when DSL 1006 initiates an I/O request by creating a ZIO, it specifies the class of storage for ZIO in the zio_t structure. DMU 1008 then assigns the class of storage property to each of the objects managed by the ZIO. SPA 1010 takes this class of storage into consideration while selecting the vdevs for I/O. Write and read algorithms illustrated in FIG. 7 and FIG. 8 are implemented in the SPA layer and operate on ZIO passed down by the DMU.

SPA implements write and read routing for ZIO with associated class of storage. For a ZIO to be written, a metaslab has to be selected. The metaslab selection algorithm considers the associated class of storage of the ZIO. Metaslab inherits the class of storage of the vdev that contains the metaslab. Class of storage of ZIO is matched with the metaslab's class of storage and selected only if there is a match. Similarly for read routing, SPA implements the read preference logic for the data that is stored in multiple copies. Storage administrator or SMS can override the system and designate any given vdev to be the preferred vdev for reading.

Data with multiple copies is handled by the mirror logic in ZFS. Default unmodified ZFS logic selects a copy in a round-robin fashion. This exemplar (FIG. 10) selects vdevs for reading based on the read preference value that is either computed by the system at runtime or set by administrator or SMS; other copies are processed only if the selected copy fails ZFS data integrity check.

The systems and methods described herein are not intended to be limited to the exemplars shown, but are to be accorded the widest scope consistent with the principles and features described herein. Although the systems and methods described herein have been described in accordance with the exemplars shown, one of ordinary skill in the art will readily recognize that there could be variations to the exemplars described herein.

## Claims

1. A method for reading a data segment of a logical block of data from a heterogeneous data volume (200, 300, 400, 505, 607, 700, 1013), the method comprising:
receiving a read operation to read the data segment from the heterogeneous data volume (200, 300, 400, 505, 607, 700, 1013), wherein:
a first redundant copy of the data segment is stored in a first class of storage and
a second redundant copy of the data segment is stored in a second class of storage;
**characterized by**:
in response to receiving the read operation:
determining a first read preference value for the first redundant copy of the data segment based on a first number of input/output operations currently pending at the first class of storage;
determining a second read preference value for the second redundant copy of the data segment based on a second number of input/output operations currently pending at the second class of storage;
selecting one of the first and the second redundant copies of the data segment based on the first and the second read preference values; and
retrieving the selected redundant copy of the data segment.

2. The method of claim 1, wherein selecting the one of the first and the second redundant copies of the data segment comprises:
selecting the first redundant copy of the data segment if the first read preference value is greater than or equal to the second read preference value; and
selecting the second redundant copy of the data segment if the first read preference value is less than the second read preference value.

3. The method of claim 1, wherein the first read preference value is selected based on a statically-defined parameter.

4. The method of claim 1, wherein the first read preference value is selected based on a dynamically-computed operational parameter associated with the first class of storage.

5. The method of claim 4, wherein the dynamically-computed operational parameter corresponds to a latency.

6. The method of claim 1, wherein retrieving the selected redundant copy comprises:
determining an access mechanism specific to the selected redundant copy of the data segment; and
retrieving the selected redundant copy of the data segment using the access mechanism.

7. The method of claim 6, wherein the access mechanism is determined based on whether the selected redundant copy is stored in the first class of storage or the second class of storage.

8. A system for reading a data segment of a logical block of data from a heterogeneous data volume (200, 300, 400, 505, 607, 700, 1013), the system comprising:
a first class of storage configured to store a first redundant copy of the data segment;
a second class of storage configured to store a second redundant copy of the data segment; and
control circuitry configured to:
receive a read operation to read the data segment from the heterogeneous data volume (200, 300, 400, 505, 607, 700, 1013);
**characterized by** the control circuitry being further configured to:
determine, in response to receiving the read operation, a first read preference value for the first redundant copy of the data segment based on a first number of input/output operations currently pending at the first class of storage;
determine a second read preference value for the second redundant copy of the data segment based on a second number of input/output operations currently pending at the second class of storage;
select one of the first and the second redundant copies of the data segment based on the first and the second read preference values; and
retrieve the selected redundant copy of the data segment.

9. The system of claim 8, wherein the control circuitry selects the one of the first and the second redundant copies of the data segment by being further configured to:
select the first redundant copy of the data segment if the first read preference value is greater than or equal to the second read preference value; and
select the second redundant copy of the data segment if the first read preference value is less than the second read preference value.

10. The system of claim 8, wherein the control circuitry is further configured to select the first read preference value based on a statically-defined parameter.

11. The system of claim 8, wherein the control circuitry is further configured to select the first read preference value based on a dynamically-computed operational parameter associated with the first class of storage.

12. The system of claim 11, wherein the dynamically-computed operational parameter corresponds to a latency.

13. The system of claim 8, wherein the control circuitry retrieves the selected redundant copy by being further configured to:
determine an access mechanism specific to the selected redundant copy of the data segment; and
retrieve the selected redundant copy of the data segment using the access mechanism.

14. The system of claim 13, wherein the control circuitry is further configured to determine the access mechanism based on whether the selected redundant copy is stored in the first class of storage or the second class of storage.

## Patentansprüche

1. Verfahren zum Lesen eines Datensegments eines logischen Datenblocks aus einem heterogenen Datenvolumen (200, 300, 400, 505, 607, 700, 1013), wobei das Verfahren Folgendes umfasst:
Empfangen eines Lesevorgangs zum Lesen des Datensegments aus dem heterogenen Datenvolumen (200, 300, 400, 505, 607, 700, 1013), wobei:
eine erste redundante Kopie des Datensegments in einer ersten Speicherklasse gespeichert ist und
eine zweite redundante Kopie des Datensegments in einer zweiten Speicherklasse gespeichert ist;
**gekennzeichnet durch**:
in Antwort auf das Empfangen des Lesevorgangs:
Bestimmen eines ersten Lesepräferenzwerts für die erste redundante Kopie des Datensegments auf Grundlage einer ersten Anzahl von gerade an der ersten Speicherklasse ausstehenden Eingabe-/Ausgabevorgängen;
Bestimmen eines zweiten Lesepräferenzwerts für die zweite redundante Kopie des Datensegments auf Grundlage einer zweiten Anzahl von gerade an der zweiten Speicherklasse ausstehenden Eingabe-/Ausgabevorgängen;
Auswählen einer der ersten und der zweiten redundanten Kopie des Datensegments auf Grundlage des ersten und zweiten Lesepräferenzwerts; und
Abrufen der ausgewählten redundanten Kopie des Datensegments.

2. Verfahren nach Anspruch 1, wobei das Auswählen der einen der ersten und zweiten redundanten Kopie des Datensegments Folgendes umfasst:
Auswählen der ersten redundanten Kopie des Datensegments, wenn der erste Lesepräferenzwert größer oder gleich dem zweitem Lesepräferenzwert ist; und
Auswählen der zweiten redundanten Kopie des Datensegments, wenn der erste Lesepräferenzwert kleiner als der zweite Lesepräferenzwert ist.

3. Verfahren nach Anspruch 1, wobei der erste Lesepräferenzwert auf Grundlage eines statisch definierten Parameters ausgewählt ist.

4. Verfahren nach Anspruch 1, wobei der erste Lesepräferenzwert auf Grundlage eines dynamisch berechneten, der ersten Speicherklasse zugeordneten Betriebsparameters ausgewählt ist.

5. Verfahren nach Anspruch 4, wobei der dynamisch berechnete Betriebsparameter einer Latenz entspricht.

6. Verfahren nach Anspruch 1, wobei das Abrufen der ausgewählten redundanten Kopie Folgendes umfasst:
Bestimmen eines für die ausgewählte Kopie des Datensegments spezifischen Zugriffsmechanismus; und
Abrufen der ausgewählten redundanten Kopie des Datensegments unter Verwendung des Zugriffsmechanismus.

7. Verfahren nach Anspruch 6, wobei der Zugriffsmechanismus auf der Grundlage bestimmt wird, ob die ausgewählte redundante Kopie in der ersten Speicherklasse oder der zweiten Speicherklasse gespeichert ist.

8. System zum Lesen eines Datensegments eines logischen Datenblocks aus einem heterogenen Datenvolumen (200, 300, 400, 505, 607, 700, 1013), wobei das System Folgendes umfasst:
eine erste Speicherklasse, die dafür konfiguriert ist, eine erste redundante Kopie des Datensegments zu speichern;
eine zweite Speicherklasse, die dafür konfiguriert ist, eine zweite redundante Kopie des Datensegments zu speichern; und
Steuerschaltung, die für Folgendes konfiguriert ist:
Empfangen eines Lesevorgangs zum Lesen des Datensegments aus dem heterogenen Datenvolumen (200, 300, 400, 505, 607, 700, 1013);
**dadurch gekennzeichnet, dass** die Steuerschaltung weiterhin für Folgendes konfiguriert ist:
Bestimmen, in Antwort auf das Empfangen des Lesevorgangs, eines ersten Lesepräferenzwerts für die erste redundante Kopie des Datensegments auf Grundlage einer ersten Anzahl von gerade an der ersten Speicherklasse ausstehenden Eingabe-/Ausgabevorgängen;
Bestimmen eines zweiten Lesepräferenzwerts für die zweite redundante Kopie des Datensegments auf Grundlage einer zweiten Anzahl von gerade an der zweiten Speicherklasse ausstehenden Eingabe-/Ausgabevorgängen;
Auswählen einer der ersten und der zweiten redundanten Kopie des Datensegments auf Grundlage des ersten und zweiten Lesepräferenzwerts; und
Abrufen der ausgewählten redundanten Kopie des Datensegments.

9. System nach Anspruch 8, wobei die Steuerschaltung die eine der ersten und der zweiten redundanten Kopie des Datensegments dadurch auswählt, dass sie weiterhin für Folgendes konfiguriert ist:
Auswählen der ersten redundanten Kopie des Datensegments, wenn der erste Lesepräferenzwert größer oder gleich dem zweitem Lesepräferenzwert ist; und
Auswählen der zweiten redundanten Kopie des Datensegments, wenn der erste Lesepräferenzwert kleiner als der zweite Lesepräferenzwert ist.

10. System nach Anspruch 8, wobei die Steuerschaltung weiterhin dafür konfiguriert ist, den ersten Lesepräferenzwert auf Grundlage eines statisch definierten Parameters auszuwählen.

11. System nach Anspruch 8, wobei die Steuerschaltung weiterhin dafür konfiguriert ist, den ersten Lesepräferenzwert auf Grundlage eines dynamisch berechneten, der ersten Speicherklasse zugeordneten Betriebsparameters auszuwählen.

12. System nach Anspruch 11, wobei der dynamisch berechnete Betriebsparameter einer Latenz entspricht.

13. System nach Anspruch 8, wobei die Steuerschaltung die ausgewählte redundante Kopie dadurch abruft, dass sie weiterhin für Folgendes konfiguriert ist:
Bestimmen eines für die ausgewählte Kopie des Datensegments spezifischen Zugriffsmechanismus; und
Abrufen der ausgewählten redundanten Kopie des Datensegments unter Verwendung des Zugriffsmechanismus.

14. System nach Anspruch 13, wobei die Steuerschaltung weiterhin dafür konfiguriert ist, den Zugriffsmechanismus auf der Grundlage zu bestimmen, ob die ausgewählte redundante Kopie in der ersten Speicherklasse oder der zweiten Speicherklasse gespeichert ist.

## Revendications

1. Procédé de lecture d'un segment de données d'un bloc logique de données à partir d'un volume de données hétérogènes (200, 300, 400, 505, 607, 700, 1013), le procédé comprenant les étapes comprenant :
la réception d'une opération de lecture pour lire le segment de données à partir du volume de données hétérogènes (200, 300, 400, 505, 607, 700, 1013), dans lequel :
une première copie redondante du segment de données est stockée dans une première classe de stockage et
une seconde copie redondante du segment de données est stockée dans une seconde classe de stockage ;
**caractérisé par** :
en réponse à la réception de l'opération de lecture :
la détermination d'une première valeur de préférence de lecture pour la première copie redondante du segment de données sur la base d'un premier nombre d'opérations d'entrées/sorties actuellement en cours au niveau de la première classe de stockage ;
la détermination d'une seconde valeur de préférence de lecture pour la seconde copie redondante du segment de données sur la base d'un second nombre d'opérations d'entrées/sorties actuellement en cours au niveau de la seconde classe de stockage ;
la sélection d'une des première et seconde copies redondantes du segment de données sur la base des première et seconde valeurs de préférence de lecture ; et
l'extraction de la copie redondante sélectionnée du segment de données.

2. Procédé selon la revendication 1, dans lequel la sélection de l'une des première et seconde copies redondantes du segment de données comprend :
la sélection de la première copie redondante du segment de données si la première valeur de préférence de lecture est supérieure ou égale à la seconde valeur de préférence de lecture ; et
la sélection de la seconde copie redondante du segment de données si la première valeur de préférence de lecture est inférieure à la seconde valeur de préférence de lecture.

3. Procédé selon la revendication 1, dans lequel la première valeur de préférence de lecture est sélectionnée sur la base d'un paramètre défini de manière statique.

4. Procédé selon la revendication 1, dans lequel la première valeur de préférence de lecture est sélectionnée sur la base d'un paramètre opérationnel calculé de manière dynamique associé à la première classe de stockage.

5. Procédé selon la revendication 4, dans lequel le paramètre opérationnel calculé de manière dynamique correspond à une latence.

6. Procédé selon la revendication 1, dans lequel l'extraction de la copie redondante sélectionnée comprend :
la détermination d'un mécanisme d'accès spécifique à la copie redondante sélectionnée du segment de données ; et
l'extraction de la copie redondante sélectionnée du segment de données à l'aide du mécanisme d'accès.

7. Procédé selon la revendication 6, dans lequel le mécanisme d'accès est déterminé selon que la copie redondante sélectionnée est stockée dans la première classe de stockage ou dans la seconde classe de stockage.

8. Système de lecture d'un segment de données d'un bloc logique de données à partir d'un volume de données hétérogènes (200, 300, 400, 505, 607, 700, 1013), le système comprenant :
une première classe de stockage configurée pour stocker une première copie redondante du segment de données ;
une seconde classe de stockage configurée pour stocker une seconde copie redondante du segment de données ; et
un circuit de commande configuré pour :
recevoir une opération de lecture pour lire le segment de données à partir du volume de données hétérogènes (200, 300, 400, 505, 607, 700, 1013) ;
**caractérisé en ce que** le circuit de commande est en outre configuré pour :
déterminer, en réponse à la réception de l'opération de lecture, une première valeur de préférence de lecture pour la première copie redondante du segment de données sur la base d'un premier nombre d'opérations d'entrées/sorties actuellement en cours au niveau de la première classe de stockage ;
déterminer une seconde valeur de préférence de lecture pour la seconde copie redondante du segment de données sur la base d'un second nombre d'opérations d'entrées/sorties actuellement en cours au niveau de la seconde classe de stockage ;
sélectionner l'une des première et seconde copies redondantes du segment de données sur la base des première et seconde valeurs de préférence de lecture ; et
extraire la copie redondante sélectionnée du segment de données.

9. Système selon la revendication 8, dans lequel le circuit de commande sélectionne l'une des première et seconde copies redondantes du segment de données en étant en outre configuré pour :
sélectionner la première copie redondante du segment de données si la première valeur de préférence de lecture est supérieure ou égale à la seconde valeur de préférence de lecture ; et
sélectionner la seconde copie redondante du segment de données si la première valeur de préférence de lecture est inférieure à la seconde valeur de préférence de lecture.

10. Système selon la revendication 8, dans lequel le circuit de commande est en outre configuré pour sélectionner la première valeur de préférence de lecture sur la base d'un paramètre défini de manière statique.

11. Système selon la revendication 8, dans lequel le circuit de commande est en outre configuré pour sélectionner la première valeur de préférence de lecture sur la base d'un paramètre opérationnel calculé de manière dynamique associé à la première classe de stockage.

12. Système selon la revendication 11, dans lequel le paramètre opérationnel calculé de manière dynamique correspond à une latence.

13. Système selon la revendication 8, dans lequel le circuit de commande extrait la copie redondante sélectionnée en étant en outre configuré pour :
déterminer un mécanisme d'accès spécifique à la copie redondante sélectionnée du segment de données ; et
extraire la copie redondante sélectionnée du segment de données à l'aide du mécanisme d'accès.

14. Système selon la revendication 13, dans lequel le circuit de commande est en outre configuré pour déterminer le mécanisme d'accès selon que la copie redondante sélectionnée est stockée dans la première classe de stockage ou dans la seconde classe de stockage.
